# EUROPÄISCHE PATENTSCHRIFT

(11) **EP 2 880 384 B1**
(45) Veröffentlichungstag und Bekanntmachung des Hinweises auf die Patenterteilung: **25.05.2022**
(21) Anmeldenummer: 13737610.9
(22) Anmeldetag: 18.07.2013
(51) Int. Cl.: F25D 21/00, F25D 21/08

(54) **KÄLTEGERÄT MIT AUTOMATISCHER ABTAUUNG SOWIE VERFAHREN ZUM BETREIBEN EINES SOLCHEN KÄLTEGERÄTS**
REFRIGERATION DEVICE HAVING AUTOMATIC DEFROSTING AND METHOD OF OPERATING SUCH A DEVICE
APPAREIL FRIGORIFIQUE À DÉGIVRAGE AUTOMATIQUE ET PROCÉDÉ DE COMMANDE D'UN TEL APPAREIL

(30) Priorität: 02.08.2012 DE 102012213644
(43) Veröffentlichungstag der Anmeldung: 10.06.2015
(73) Patentinhaber: BSH Hausgeräte GmbH, 81739 München (DE)
(72) Erfinder: HÄRLEN, Jochen, 89551 Königsbronn (DE); SERT, Birtan, 89522 Heidenheim (DE); SPERLING, Alex, 86165 Augsburg (DE); ZIEGLER, Nikolaus, 73485 Unterschneidheim (DE)
(86) Internationale Anmeldenummer: PCT/EP2013/065140
(87) Internationale Veröffentlichungsnummer: WO 2014/019859

(56) Entgegenhaltungen:
- EP-A2- 0 692 687
- JP-A- 2001 183 036

## Beschreibung

Die vorliegende Erfindung betrifft ein Kältegerät, insbesondere ein Haushaltskältegerät, mit einem automatisch abtauenden Verdampfer.

Am Verdampfer eines Kältegeräts schlägt sich im Laufe des Betriebs Feuchtigkeit nieder, die zu einer den Verdampfer thermisch isolierenden Reifschicht anwachsen kann. Eine solche Schicht beeinträchtigt erheblich die Energieeffizienz des Kältegeräts. Es ist daher seit langem, z.B. aus JP 2001 183036 A, bekannt, dem Verdampfer eines Kältegeräts eine Heizung zuzuordnen, die zum Abtauen der Reifschicht von Zeit zu Zeit betrieben wird. Häufig ist eine Steuerung dieser Abtauheizung an einen Betriebsstundenzähler gekoppelt, um den Verdampfer jeweils nach einer festgelegten Zahl von Betriebsstunden des Verdichters abzutauen. Die Bedingung für das Abtauen kann daher nur eintreten, während der Verdichter läuft, mit der Konsequenz, dass ein automatisches Abtauen normalerweise unmittelbar auf eine Betriebsphase des Verdampfers folgt.

Zu diesem Zeitpunkt enthält der Verdampfer eine beträchtliche Menge an flüssigem Kältemittel, das bei einem Abtauen miterwärmt werden muss. Dabei geht es größtenteils in den dampfförmigen Zustand über. Energie, die zuvor aufgewandt worden ist, um das Kältemittel zu verflüssigen, geht so in großer Menge ungenutzt verloren. Stattdessen wird eine beträchtliche Menge an Heizenergie benötigt, um das Kältemittel zu verdampfen. Durch die zum Einbringen dieser Heizenergie erforderliche Zeit wird der Abtauvorgang nutzlos verlängert.

Zwar ließe sich eine solche ineffektive Energienutzung vermeiden, indem zwischen dem Abschalten des Verdichters und dem Einschalten der Abtauheizung eine Zeitspanne abgewartet wird, in der das flüssige Kältemittel unter Aufnahme von Wärme aus einem Kältefach des Kältegeräts verdampfen kann, doch ergibt sich dabei das Problem, dass zeitgleich mit der Verdampfung des flüssigen Kältemittels sich auch das Kältefach wieder erwärmt. Je länger folglich die Wartezeit zwischen dem Abschalten des Verdichters und dem Einschalten der Abtauheizung ist, umso kleiner ist zwar die Restmenge an flüssigem Kältemittel, das beim Abtauen verdampft werden muss, umso größer ist aber auch die Wahrscheinlichkeit, dass zu einem Zeitpunkt, an dem das Kältefach erneut Kühlbedarf hat, der Abtauvorgang noch nicht abgeschlossen ist und folglich entweder das Abtauen vorzeitig unterbrochen oder eine unerwünschte Erwärmung des Kältefachs hingenommen werden muss.

Kältegeräte, deren Kältemittelkreis zwischen einem Auslass des Verdichters und einem Einlass des Verdampfers ein Absperrventil umfasst, sind an sich bekannt. Ein solches Absperrventil dient herkömmlicherweise dazu, in einer Stillstandsphase des Verdichters eine während des Verdichterbetriebs aufgebaute Druckdifferenz zwischen Verdichterausgang und Verdampfer aufrechtzuerhalten.

Die EP 0 692 687 A2 offenbart ferner ein Kältegerät, bei welchem ein Verdampfer mittels einer Heizung entfrostet wird. Ein zwischen einem Ausgang eines Verdichters und einem

Eingang des Verdampfers angeordnetes Absperrventil wird geschlossen, bevor der Verdichter gestoppt wird, um Kältemittel aus dem Verdampfer abzuführen. Dies dient dem Zweck, einen Druck auf der Saugseite des Verdichters während des Stillstands des Verdichters möglichst gering zu halten, um beim Wiedereinschalten des Verdichters eine Lärmbelastung zu verringern.

Aufgabe der vorliegenden Erfindung ist allgemein, die Energieeffizienz eines Kältegeräts zu verbessern. Insbesondere liegt die Aufgabe darin, Effizienzeinbußen zu vermeiden, die auf ein unnötiges Erwärmen von Kältemittel bei einem Abtauen des Verdampfers zurückzuführen sind.

Die Aufgabe wird durch ein Kältegerät mit den Merkmalen des Anspruchs 1 gelöst.

Wenn der Verdichter bei geschlossenem Absperrventil läuft, erzeugt er einen niedrigen Druck im Verdampfer, der die Verdunstung von darin enthaltenen flüssigen Kältemittel begünstigt. Da der bei der Verdunstung entstehende Dampf vom Verdichter abgesaugt wird, ist nach einer ausreichenden Laufzeit des Verdichters nur eine sehr geringe Restmenge an Kältemittel im Verdampfer enthalten. Daher muss allenfalls noch ein kleiner Bruchteil der Leistung der Heizung zum Erwärmen des Kältemittels aufgewandt werden, und ein größerer Anteil der Heizleistung steht zum Auftauen der Reifschicht zur Verfügung. Da sich die zum Abtauen benötigte Zeit verkürzt, verringert sich auch der durch das Abtauen verursachte Wärmeeintrag in eine Lagerkammer des Kältegeräts, was ebenfalls der Effizienz zugute kommt.

Die Laufzeit des Verdichters in dieser Zeitspanne sollte lang genug sein, um die Menge des Kältemittels im Verdampfer merklich zu reduzieren. Im Allgemeinen sollte die Laufzeit daher nicht unter 2 Minuten betragen.

Alternativ kann eine Mindestlaufzeit des Verdichters zwischen dem Schließen des Absperrventils und dem Einschalten der Heizung auch aus der Überlegung abgeleitet werden, dass das vom Verdichter geförderte Volumen ausreichen sollte, um einen wesentlichen Teil des Kältemittels, das beim Schließen des Absperrventils im Verdampfer enthalten ist, daraus zu beseitigen. So beträgt z.B. der Dampfdruck des als Kältemittel verbreiteten Butan bei typischen Temperaturen des Verdampfers ca. 0,5 bar, und das Verhältnis zwischen der Dichte im gasförmigen und im flüssigen Zustand beträgt ca. 1:400. Wäre der Verdampfer vollständig mit flüssigen Kältemittel gefüllt, wenn das Absperrventil schließt, dann müsste folglich (sofern der Druck von 0,5 bar nicht unterschritten wird) ein Fördervolumen des Verdichters entsprechend dem 400fachen des Verdampfervolumens ausreichen, um so viel Kältemittel abzupumpen, dass nur noch gasförmiges Kältemittel im Verdampfer zurückbleibt. Da der Verdampfer immer nur zu einem Bruchteil mit flüssigem Kältemittel gefüllt ist, sollte ein gefördertes Volumen von wenigstens dem 50fachen, besser noch wenigstens dem 100fachen des Verdampfervolumens ausreichen, um wenn nicht alles, dann doch zumindest einen Großteil des darin enthaltenen flüssigen Kältemittels zu beseitigen und so die Wärmekapazität des Verdampfers deutlich zu reduzieren.

Während die Heizung im Betrieb ist, sollte das Absperrventil geschlossen gehalten werden, damit der Verdampfer nicht durch Zustrom und Expansion von Kältemittel darin abgekühlt wird.

Zwischen dem Abschalten der Heizung und einem anschließenden Einschalten des Verdichters kann es zweckmäßig sein, das Absperrventil zu öffnen, um die Druckdifferenz zwischen Ein- und Auslass des Verdichters zu reduzieren und dem Verdichter so das Anlaufen zu erleichtern.

Generell ist bevorzugt, für das erfindungsgemäße Kältegerät einen drehzahlgeregelten Verdichter zu benutzen, da diese in der Lage sind, auch gegen ein beträchtliches Druckgefälle zwischen ihrem Ein- und Auslass anzulaufen. Wenn der Verdichter ausgelegt ist, um gegen eine Druckdifferenz zu starten, die nach einer Stillstandsphase des Verdichters, in der die Heizung nicht betrieben worden ist, zwischen Hochdruckbereich und Niederdruckbereich des Kältemittelkreises besteht, kann zumindest nach einer solchen Stillstandsphase ein Öffnen des Absperrventils entfallen. Da die Druckdifferenz zwischen Hochdruckbereich und Niederdruckbereich nach einem Abtauen im Allgemeinen noch größer sein wird als nach einer normalen Stillstandsphase des Verdichters ohne Abtauen, kann es auch bei Verwendung eines Verdichters, der gegen die Druckdifferenz nach einer normalen Stillstandsphase starten kann, zweckmäßig sein, nach einem Abtauen die Druckdifferenz vor dem Start des Verdichters zu reduzieren und dazu das Absperrventil vor dem Start des Verdichters zumindest für eine kurze Zeit zu öffnen.

Es ist an sich bekannt, die Steuereinheit eines Kältegeräts mit einem Temperaturfühler zu verbinden, damit diese den Verdichter bei Unterschreitung eines ersten Grenzwertes der Temperatur ausschalten kann. Wenn unmittelbar vor einem Abtauen die Steuereinheit bei Unterschreitung dieses Grenzwerts zwar das Absperrventil schließt, den Verdichter aber weiter betreibt, um das flüssige Kältemittel aus dem Verdampfer abzusaugen, dann führt dies zu einer stärkeren Abkühlung des Verdampfers als im Normalbetrieb. Eine solche niedrige Temperatur hat für die Haltbarkeit des Kühlguts im Kältegerät im allgemeinen keine Vorteile. Der mit der tiefen Verdampfertemperatur einhergehende niedrige Dampfdruck des Kältemittels macht einen langen Betrieb des Verdichters erforderlich, um das Kältemittel aus dem Verdampfer zu beseitigen. Erfindungsgemäß ist vorgesehen, dass die Steuereinheit vor einem Abtauen des Verdampfers das Absperrventil schließt, wenn ein zweiter Grenzwert der Temperatur unterschritten wird, der höher liegt als der erste Grenzwert. Die Differenz zwischen den Grenzwerten kann zweckmäßigerweise so gewählt werden, dass durch den Betrieb des Verdichters nach Schließen des Absperrventils der erste Grenzwert der Temperatur wenigstens ungefähr erreicht wird. Beheizbare Verdampfer sind insbesondere bei Nofrost-Kältegeräten gebräuchlich, bei denen der Verdampfer in einer von einer Lagerkammer des Kältegeräts getrennten Verdampferkammer untergebracht ist und ein Ventilator Luft zwischen der Lagerkammer und der Verdampferkammer umwälzt, um die Lagerkammer zu kühlen. Ein solcher Ventilator sollte zweckmäßigerweise auch dann in Betrieb sein, wenn bei geschlossenem Absperrventil der Verdichter in Betrieb ist, damit die beim Absaugen des Kältemittels erzeugte Kälte der Lagerkammer noch zugute kommen kann.

Der Ventilator kann auch in einer Zeitspanne zwischen dem Ausschalten des Verdichters und dem darauffolgenden Einschalten der Heizung in Betrieb sein, um der Verdampferkammer vor Inbetriebnahme der Heizung noch möglichst viel Wärme aus der Lagerkammer zuzuführen.

Die Aufgabe wird ferner gelöst durch ein Verfahren zum Betreiben eines Kältegeräts, das einen Kältemittelkreis mit einem Verdichter, einem Verdampfer und einem Absperrventil zwischen einem Auslass des Verdichters und einem Einlass des Verdampfers umfasst, mit den Schritten:
- Betreiben des Verdichters bei geschlossenem Absperrventil;
- Erfassen einer Temperatur mittels eines Temperaturfühlers;
- Ausschalten des Verdichters bei Unterschreitung eines ersten Grenzwerts der erfassten Temperatur; und danach
- Beheizen des Verdampfers, um diesen abzutauen, wobei das Absperrventil vor dem Abtauen des Verdampfers geschlossen wird, wenn ein zweiter Grenzwert der Temperatur unterschritten wird, der höher liegt als der erste Grenzwert.

Weitere Vorteile der Erfindung ergeben sich aus der nachfolgenden Beschreibung von Ausführungsbeispielen unter Bezugnahme auf die beigefügten Figuren. Aus dieser Beschreibung und den Figuren gehen auch Merkmale der Ausführungsbeispiele hervor, die nicht in den Ansprüchen erwähnt sind. Solche Merkmale können auch in anderen als den hier spezifisch offenbarten Kombinationen auftreten. Die Tatsache, dass mehrere solche Merkmale in einem gleichen Satz oder in einer anderen Art von Textzusammenhang miteinander erwähnt sind, rechtfertigt daher nicht den Schluss, dass sie nur in der spezifisch offenbarten Kombination auftreten können; stattdessen ist grundsätzlich davon auszugehen, dass von mehreren solchen Merkmalen auch einzelne weggelassen oder abgewandelt werden können, sofern dies die Funktionsfähigkeit der Erfindung nicht in Frage stellt. Es zeigen:
- Fig. 1: ein Blockdiagramm des Kältemittelkreises eines erfindungsgemäßen Kältegeräts;
- Fig. 2: einen schematischen Schnitt durch ein erfindungsgemäßes Kältegerät, und
- Fig. 3: die zeitliche Entwicklung von verschiedenen Betriebsgrößen des Kältegeräts.

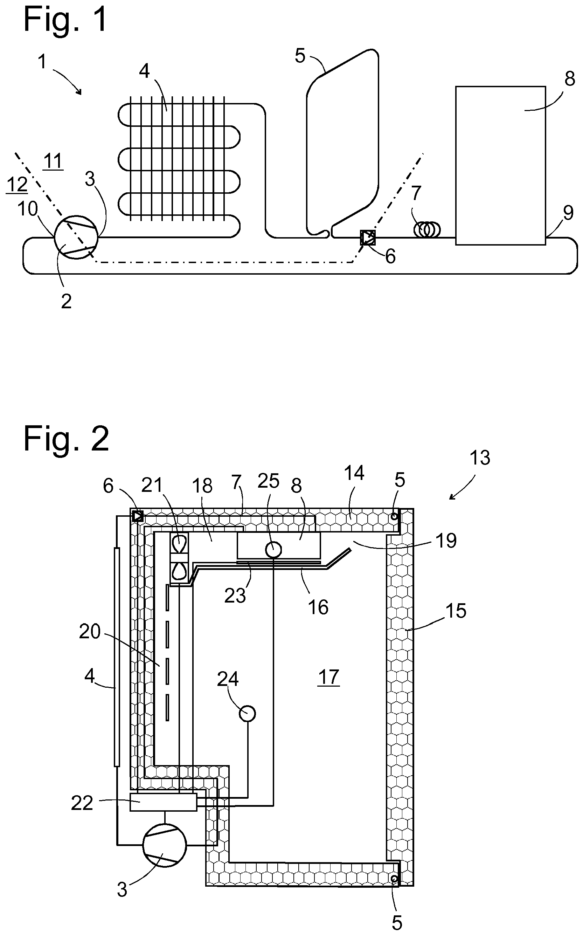

Fig. 1 zeigt schematisch einen Kältemittelkreislauf 1 eines erfindungsgemäßen Haushaltskältegeräts. Ein Verdichter 2 hat einen Auslass 3, an den nacheinander ein Verflüssiger 4, eine Rahmenheizung 5, ein Absperrventil 6, eine Kapillare 7 und ein Verdampfer 8 angeschlossen sind. Ein Auslass 9 des Verdampfers 8 ist an einen Einlass 10 des Verdichters 2 angeschlossen. Der gesamte Kältemittelkreislauf 1 kann unterteilt werden in einen Hochdruckbereich 11, der sich bei normalem Betrieb des Verdichters 2 von dessen Auslass 3 bis zur Kapillare 7 und, wenn der Verdichter 2 ausgeschaltet und das Absperrventil 6 geschlossen ist, bis zu letzterem erstreckt, und einen Niederdruckbereich 12, der sich von der Kapillare 7 bzw. dem Absperrventil 6 bis zum Einlass 10 des Verdichters 2 erstreckt.

Fig. 2 zeigt ein mit dem Kältemittelkreislauf 1 ausgestattetes Kältegerät 13 in einem schematischen Querschnitt. Es handelt sich um ein Gerät in Nofrost-Bauweise, d.h. ein Innenraum eines durch einen Korpus 14 und eine daran angelenkte Tür 15 gebildeten wärmeisolierenden Gehäuses ist durch eine Zwischenwand 16 unterteilt in eine Lagerkammer 17 für Kühlgut und eine Verdampferkammer 18, die den Verdampfer 8 aufnimmt. Die Verdampferkammer 18 kommuniziert über eine Einlassöffnung 19 an ihrer der Tür 15 zugewandten Seite und einen sich an einer Rückwand des Korpus 14 erstreckenden Verteilerkanal 20 mit der Lagerkammer 17. Um den Luftaustausch zwischen den Kammern 17, 18 anzutreiben, ist ein Ventilator 21 vorgesehen. Eine elektronische Steuereinheit 22 steuert den Betrieb des Ventilators 21, des Verdichters 2 und einer am Verdampfer 8 montierten elektrischen Heizung 23 mit Hilfe eines internen Zeitgebers sowie von an der Lagerkammer 17 bzw. dem Verdampfer 8 angeordneten Temperaturfühlern 24, 25.

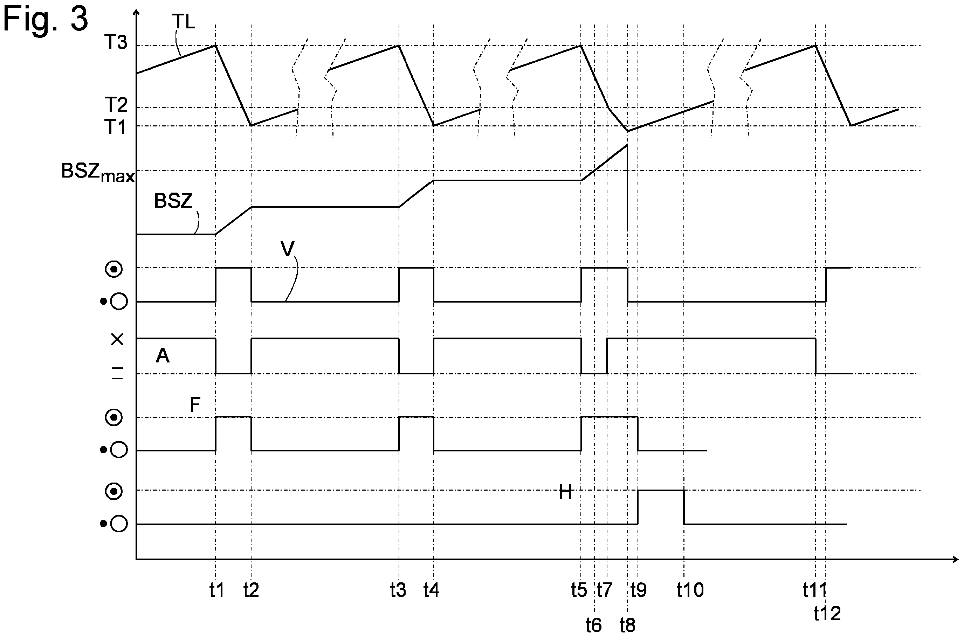

Die Arbeitsweise der Steuereinheit 22 wird anhand des Diagramms der Fig. 3 erläutert. Eine Kurve TL zeigt den Verlauf der vom Temperaturfühler 24 erfassten Temperatur der Lagerkammer 17 im Laufe der Zeit t. Diese Temperatur steigt zunächst langsam an, bis sie zur Zeit t1 eine Einschaltschwelle T3 erreicht. Dies führt, wie an einer den Betriebszustand des Verdichters 2 darstellenden Kurve V zu erkennen, zum Einschalten des Verdichters 2 zur Zeit t1. Ein interner Betriebsstundenzähler, veranschaulicht durch die Kurve BSZ, der vor t1, bei ausgeschaltetem Verdichter 2, konstant war, beginnt nun, linear anzuwachsen. Das Absperrventil 6, dessen Zustand durch eine Kurve A dargestellt wird, ist seit dem Zeitpunkt t1 offen, und der Ventilator 21, dargestellt durch eine Kurve F, ist eingeschaltet.

Durch den Betrieb des Verdichters 2 kühlt der Verdampfer 8 ab, am Verdampfer 8 abgekühlte Luft wird vom Ventilator 21 in die Lagerkammer 17 befördert, und die dort vom Temperaturfühler 24 erfasste Temperatur nimmt ab, bis zum Zeitpunkt t2 eine untere Grenztemperatur T1 erreicht ist. Dies führt zur Abschaltung des Verdichters 2 (siehe Kurve V), zur Sperrung des Absperrventils (Kurve A) und zur Abschaltung des Ventilators 21 (Kurve F). Der Betriebsstundenzähler BSZ bleibt auf dem zur Zeit t2 erreichten Wert stehen.

Die Temperatur in der Lagerkammer 17 steigt daraufhin von Neuem an, bis sie zur Zeit t3 wieder die obere Grenztemperatur T3 erreicht. Wiederum schaltet die Steuereinheit 22 Verdichter 2 und Ventilator 21 ein und öffnet das Absperrventil 6. Der Betriebsstundenzähler BSZ steigt weiter, bis zum Zeitpunkt t4 erneut die untere Grenztemperatur T1 erreicht ist und Verdichter 2 und Ventilator 21 wieder ausgeschaltet werden und das Absperrventil 6 geschlossen wird.

Zur Zeit t5 wird ein weiteres Mal die obere Grenztemperatur T3 erreicht, und der Verdichter 2 wird eingeschaltet. Kurz darauf, zum Zeitpunkt t6, erreicht der Betriebsstundenzähler einen Grenzwert BSZₘₐₓ, woraus die Steuereinheit 22 erkennt, dass es notwendig ist, den Verdampfer 8 abzutauen.

Die Erfassung der Betriebsstundenzahl als Kriterium für die Abtaunotwendigkeit hat im Wesentlichen den Vorteil, einfach und preiswert realisierbar zu sein. Um eine genauere Abschätzung der Eismenge auf dem Verdampfer 8 zu erzielen, kann darüber hinaus berücksichtigt werden, wie viel Luftfeuchtigkeit in die Lagerkammer 17 gelangt, z.B. indem ein Öffnen der Tür 15 erfasst und der Betriebsstundenzähler BSZ für jedes Öffnen der Tür um einen bestimmten Betrag inkrementiert wird oder die Geschwindigkeit seines Anstiegs bei laufendem Verdichter 2 abhängig gemacht wird von der Zahl der seit der letzten Betriebsphase des Verdichters 2 stattgefundenen Türöffnungen. Auch eine direkte Erfassung der Dicke der Eisschicht auf dem Verdampfer 8, z.B. auf optischem Wege, etwa mittels einer Lichtschranke, kommt in Betracht.

Nachdem die Steuereinheit 22 zum Zeitpunkt t6 erkannt hat, dass ein Abtauen erforderlich ist, beginnt sie, die vom Temperaturfühler 24 erfasste Temperatur TL mit einer Grenztemperatur T2 zu vergleichen, die zwischen T3 und T1 liegt. Im hier betrachteten Fall liegt TL zum Zeitpunkt t6 noch über T2. Sobald zum Zeitpunkt t7 T2 unterschritten wird, schließt die Steuereinheit 22 das Absperrventil 6, während Verdichter 2 und Ventilator 21 noch für mehrere Minuten weiterlaufen. Dass nach dem Zeitpunkt t7 kein Kältemittel mehr in den Verdampfer 8 zuströmt, kann dazu führen, dass, wie an der Kurve TL gezeigt, die Abnahme der Temperatur sich verlangsamt. Da jedoch zum Zeitpunkt t7 der Schließung des Absperrventils 6 der Verdampfer 8 flüssiges Kältemittel enthält, fällt die Temperatur TL auch nach t7 noch weiter.

Die Zeitspanne [t7, t8] zwischen dem Schließen des Absperrventils 6 und dem Ausschalten des Verdichters 2 kann eine fest vorgegebene Länge haben, die unter Berücksichtigung des Volumendurchsatzes des Verdichters 2 und der zum Zeitpunkt t7 absehbar im Verdampfer 8 enthaltenen Menge an flüssigem Kältemittel so berechnet ist, dass sie ausreicht, um zumindest den überwiegenden Teil dieses Kältemittels in Form von Dampf aus dem Verdampfer 8 abzusaugen. Daher kann die Temperatur TL zum Zeitpunkt t8 der Verdampferabschaltung in diesem Fall von der Grenztemperatur T1 abweichen. Denkbar ist aber auch, T2 so zu wählen, dass die zum Abkühlen von T2 nach T1 voraussichtlich benötigte Zeit in etwa ausreicht, um das flüssige Kältemittel im Verdampfer 8 zu verdampfen, und das Erreichen der Grenztemperatur T1 als Kriterium für das Abschalten des Verdampfers 8 beizubehalten.

Es kann der Fall auftreten, dass zum Zeitpunkt t6, an dem der Betriebsstundenzähler den Grenzwert BSZₘₐₓ erreicht, die Temperatur im Lagerfach 17 bereits niedriger ist als T2. Die Steuereinheit 22 könnte in diesem Fall gleichzeitig mit Erreichen des Grenzwerts BSZₘₐₓ das Absperrventil 6 schließen; allerdings würde, wenn dann der Verdichter 2 lang genug weiter betrieben wird, um das flüssige Kältemittel im Verdampfer 8 im Wesentlichen zu beseitigen, die Temperatur im Lagerfach 17 unter T1 abfallen. Dies kann vermieden werden, indem in diesem Fall die Betriebsphase des Verdichters 2 normal beendet wird, d.h. der Verdichter bei Erreichen der Temperatur T1 ausgeschaltet wird und bis dahin das Absperrventil 6 offen bleibt, und eine Umschaltung auf den Vergleich mit T2 und das Schließen des Absperrventils bei Erreichen dieser Temperatur erst in der nächstfolgenden Betriebsphase des Verdichters 2 stattfindet.

Der Betriebsstundenzähler BSZ wird hier gleichzeitig mit dem Abschalten des Verdichters 8 zur Zeit t8 auf Null zurückgesetzt. Der Ventilator 21 kann, wenn gewünscht, noch für eine kurze Zeit, bis t9, nachlaufen gelassen werden. Dann wird auch er aus- und die Heizung 23 eingeschaltet, wie durch eine Kurve H in Fig. 3 dargestellt.

Die Dauer der Zeitspanne [t9, t10], in der die Heizung 23 in Betrieb ist, kann fest vorgegeben sein; alternativ kann als Ausschaltzeitpunkt t10 der Heizung 23 ein Zeitpunkt gewählt werden, bei dem ein Anstieg der vom Temperaturfühler 25 am Verdampfer 8 erfassten Temperatur anzeigt, dass dieser vollständig abgetaut ist.

Das Leerpumpen des Verdampfers 8 vor dem Abtauen führt dazu, dass, wenn zum Zeitpunkt t11 die Temperatur TL in der Lagerkammer 17 zum ersten Mal nach dem Abtauen wieder auf T3 angestiegen ist, so dass der Verdichter 2 laufen muss, die Druckdifferenz zwischen Hochdruckbereich 11 und Niederdruckbereich 12 des Kältemittelkreislaufs 1 höher ist als nach einer normalen Betriebsphase des Verdichters 8 wie etwa den Zeitspannen [t1, t2] bzw. [t3, t4]. Eine solche hohe Druckdifferenz kann selbst bei einem drehzahlgeregelten Verdichter 2, der leistungsfähig genug ist, um gegen die nach einer normalen Stillstandsphase, etwa zum Zeitpunkt t1, t3 oder t5, bestehende Druckdifferenz zu starten, zu Startschwierigkeiten führen. Diese lassen sich beheben, indem jeweils nach einem Abtauen als erstes, zum Zeitpunkt t11, das Absperrventil 6 geöffnet wird (siehe Kurve A) und anschließend, mit einer kurzen Verzögerung, die nicht ausreichen sollte, um die Druckdifferenz zwischen den Bereichen 11, 12 vollständig abzubauen, der Verdichter 2 zum Zeitpunkt t12 gestartet wird.

**BEZUGSZEICHEN**

| | | | |
|---|---|---|---|
| 1 | Kältemittelkreislauf | 20 | Verteilerkanal |
| 2 | Verdichter | 21 | Ventilator |
| 3 | Auslass | 22 | Steuereinheit |
| 4 | Verflüssiger | 23 | Heizung |
| 5 | Rahmenheizung | 24 | Temperaturfühler |
| 6 | Absperrventil | 25 | Temperaturfühler |
| 7 | Kapillare | TL | Temperatur der Lagerkammer 17 |
| 8 | Verdampfer | BSZ | Stand des Betriebsstundenzählers |
| 9 | Auslass | V | Betriebszustand des Verdichters 2 |
| 10 | Einlass | A | Betriebszustand des Absperrventils 6 |
| 11 | Hochdruckbereich | F | Betriebszustand des Ventilators 21 |
| 12 | Niederdruckbereich | H | Betriebszustand der Heizung 23 |
| 13 | Kältegerät | | |
| 14 | Korpus | | |
| 15 | Tür | | |
| 16 | Zwischenwand | | |
| 17 | Lagerkammer | | |
| 18 | Verdampferkammer | | |
| 19 | Einlassöffnung | | |

## Patentansprüche

1. Kältegerät, insbesondere Haushaltskältegerät, mit einem Kältemittelkreis (1), der einen Verdichter (2), einen Verdampfer (8) und ein Absperrventil (6) zwischen einem Auslass (3) des Verdichters (2) und einem Einlass des Verdampfers (8) umfasst, einer Heizung (23) zum Abtauen des Verdampfers (8) und einer Steuereinheit (22), die eingerichtet ist, ein Abtauen des Verdampfers (8) durch Betreiben des Verdichters (2) bei geschlossenem Absperrventil (6) vorzubereiten, wobei die Steuereinheit (22) eingerichtet ist, den Verdichter (2) in einer Zeitspanne zwischen dem Schließen (t7) des Absperrventils (6) und dem Einschalten (t9) der Heizung (23) zu betreiben, **dadurch gekennzeichnet, dass** die Steuereinheit (22) mit einem Temperaturfühler (24) verbunden und eingerichtet ist, den Verdichter (2) bei Unterschreitung eines ersten Grenzwerts (T1) der von dem Temperaturfühler (24) erfassten Temperatur (TL) auszuschalten und vor einem Abtauen des Verdampfers (8) das Absperrventil (6) zu schließen, wenn ein zweiter Grenzwert (T2) der Temperatur unterschritten wird, der höher liegt als der erste Grenzwert (T1).

2. Kältegerät nach Anspruch 1, **dadurch gekennzeichnet, dass** die Steuereinheit (22) so eingerichtet ist, dass die Laufzeit ([t7, t8]) des Verdichters (2) in der Zeitspanne wenigstens 2 Minuten beträgt.

3. Kältegerät nach Anspruch 1, **dadurch gekennzeichnet, dass** die Steuereinheit (22) so eingerichtet ist, dass das vom Verdichter (2) in der Zeitspanne geförderte Volumen wenigstens das Fünzigfache, vorzugsweise das Hundertfache, des Volumens des Verdampfers (8) beträgt.

4. Kältegerät nach einem der vorhergehenden Ansprüche, **dadurch gekennzeichnet, dass** die Steuereinheit (22) eingerichtet ist, das Absperrventil (6) während des Betriebs ([t9, t10]) der Heizung (23) geschlossen zu halten.

5. Kältegerät nach einem der vorhergehenden Ansprüche, **dadurch gekennzeichnet, dass** die Steuereinheit (22) eingerichtet ist, das Absperrventil (6) zwischen einem Abschalten (t10) der Heizung (23) und einem anschließenden Einschalten (t12) des Verdichters (2) zu öffnen.

6. Kältegerät nach einem der vorhergehenden Ansprüche, **dadurch gekennzeichnet, dass** der Verdichter (2) ausgelegt ist, um gegen eine Druckdifferenz zu starten, die nach einer Stillstandsphase des Verdichters (2), in der die Heizung (23) nicht betrieben worden ist, zwischen einem Hochdruckbereich (11) und einem Niederdruckbereich (12) des Kältemittelkreises (1) besteht.

7. Kältegerät nach einem der vorhergehenden Ansprüche, **dadurch gekennzeichnet, dass** der Verdampfer (8) in einer von einer Lagerkammer (17) des Kältegeräts (13) getrennten Verdampferkammer (18) untergebracht ist und die Steuereinheit (22) eingerichtet ist, einen Ventilator (21), der angeordnet ist, um Luft zwischen der Lagerkammer (17) und der Verdampferkammer (18) umzuwälzen, zu betreiben, wenn bei geschlossenem Absperrventil (6) der Verdichter (2) in Betrieb ist.

8. Kältegerät nach Anspruch 7, **dadurch gekennzeichnet, dass** die Steuereinheit (22) so eingerichtet ist, dass der Ventilator (21) in einer Zeitspanne ([t8, t9]) zwischen dem Ausschalten (t8) des Verdichters (2) und dem Einschalten (t9) der Heizung (23) in Betrieb ist.

9. Verfahren zum Betreiben eines Kältegeräts, das einen Kältemittelkreis (1) mit einem Verdichter (2), einem Verdampfer (8) und einem Absperrventil (6) zwischen einem Auslass (3) des Verdichters (2) und einem Einlass des Verdampfers (8) umfasst, mit den Schritten:
- Betreiben ([t7, t8]) des Verdichters (2) bei geschlossenem Absperrventil (6);
- Erfassen einer Temperatur (TL) mittels eines Temperaturfühlers (24);
- Ausschalten des Verdichters (t8) bei Unterschreitung eines ersten Grenzwerts (T1) der erfassten Temperatur (TL); und danach
- Beheizen ([t9, t10]) des Verdampfers (8), um diesen abzutauen, wobei das Absperrventil (6) vor dem Abtauen des Verdampfers (8) geschlossen wird, wenn ein zweiter Grenzwert (T2) der Temperatur unterschritten wird, der höher liegt als der erste Grenzwert (T1).

## Claims

1. Refrigeration appliance, in particular household refrigeration appliance having a refrigerant circuit (1) which comprises a compressor (2), an evaporator (8) and a shut-off valve (6) between an outlet (3) of the compressor (2) and an inlet of the evaporator (8), a heater (23) for defrosting the evaporator (8) and a control unit (22), which is configured to prepare for defrosting of the evaporator (8) by operating the compressor (2) with the shut-off valve (6) closed, wherein the control unit (22) is configured to operate the compressor (2) in a time period between the closing (t7) of the shut-off valve (6) and the switching-on (t9) of the heater (23), **characterised in that** the control unit (22) is connected to a temperature sensor (24) and is configured to switch off the compressor (2) when a first limit value (T1) of the temperature (TL) detected by the temperature sensor (24) is undershot and to close the shut-off valve (6) before a defrosting of the evaporator (8) if a second limit value (T2) of the temperature which lies higher than the first limit value (T1) is undershot.

2. Refrigeration appliance according to claim 1, **characterised in that** the control unit (22) is configured such that the running time ([t7, t8]) of the compressor (2) in the time period is at least 2 minutes.

3. Refrigeration appliance according to claim 1, **characterised in that** the control unit (22) is configured such that the volume conveyed by the compressor (2) in the time period is at least 50 times, preferably 100 times, the volume of the evaporator (8).

4. Refrigeration appliance according to one of the preceding claims, **characterised in that** the control unit (22) is configured to keep the shut-off valve (6) closed during operation ([t9, t10]) of the heater (23).

5. Refrigeration appliance according to one of the preceding claims, **characterised in that** the control unit (22) is configured to open the shut-off valve (6) between a switching-off (t10) of the heater (23) and a subsequent switching-on (t12) of the compressor (2).

6. Refrigeration appliance according to one of the preceding claims, **characterised in that** the compressor (2) is designed to start against a pressure difference which exists between a high pressure region (11) and a low pressure region (12) of the refrigerant circuit (1) following a phase of standstill of the compressor (2) during which the heater (23) has not been operated.

7. Refrigeration appliance according to one of the preceding claims, **characterised in that** the evaporator (8) is accommodated in an evaporator chamber (18) which is separate from a storage chamber (17) of the refrigeration appliance (13) and the control unit (22) is configured to operate a fan (21) which is arranged to circulate air between the storage chamber (17) and the evaporator chamber (18) when the compressor (2) is in operation with the shut-off valve (6) closed.

8. Refrigeration appliance according to claim 7, **characterised in that** the control unit (22) is configured such that the fan (21) is in operation in a time period ([t8, t9]) between the switching-off (t8) of the compressor (2) and the switching-on (t9) of the heater (23).

9. Method for operating a refrigeration appliance which comprises a refrigerant circuit (1) with a compressor (2), an evaporator (8) and a shut-off valve (6) between an outlet (3) of the compressor (2) and an inlet of the evaporator (8), having the steps:
- Operation ([t7, t8]) of the compressor (2) with the shut-off valve (6) closed;
- Detection of a temperature (TL) by means of a temperature sensor (24);
- Switching-off of the compressor (t8) when a first limit value (T1) of the detected temperature (TL) is undershot; and subsequently
- Heating ([t9, t10]) of the evaporator (8), in order to defrost it, wherein the shut-off valve (6) is closed before defrosting the evaporator (8), if a second limit value (T2) of the temperature, which lies higher than the first limit value (T1), is undershot.

## Revendications

1. Appareil frigorifique, en particulier appareil frigorifique électroménager, comportant un cycle d'agent frigorigène (1), lequel comprend un compresseur (2), un évaporateur (8) et une vanne d'arrêt (6) entre une sortie (3) du compresseur (2) et une entrée de l'évaporateur (8), un chauffage (23) destiné au dégivrage de l'évaporateur (8) et une unité de commande (22) prévue pour préparer le dégivrage de l'évaporateur (8) par le fonctionnement du compresseur (2) lorsque la vanne d'arrêt (6) est fermée, dans lequel l'unité de commande (22) est prévue pour faire fonctionner le compresseur (2) dans un laps de temps entre la fermeture (t7) de la vanne d'arrêt (6) et la mise sous tension (t9) du chauffage (23), **caractérisé en ce que** l'unité de commande (22) est raccordée à un détecteur de température (24) et est prévue pour mettre le compresseur (2) hors tension en cas de dépassement négatif d'un premier seuil (T1) de la température (TL) détectée par le détecteur de température (24) et fermer la vanne d'arrêt (6) avant le dégivrage de l'évaporateur (8), quand un deuxième seuil (T2) de la température est dépassé négativement, lequel est plus élevé que le premier seuil (T1).

2. Appareil frigorifique selon la revendication 1, **caractérisé en ce que** l'unité de commande (22) est prévue pour que la durée de fonctionnement ([t7, t8]) du compresseur (2) dans le créneau soit au moins de 2 minutes.

3. Appareil frigorifique selon la revendication 1, **caractérisé en ce que** l'unité de commande (22) est prévue pour que le volume transporté par le compresseur (2) pendant la durée de fonctionnement, soit au moins cinquante fois, de préférence cent fois le volume de l'évaporateur (8).

4. Appareil frigorifique selon l'une des revendications précédentes, **caractérisé en ce que** l'unité de commande (22) est prévue pour maintenir fermée la vanne d'arrêt (6) pendant le fonctionnement ([t9, t10]) du chauffage (23).

5. Appareil frigorifique selon l'une des revendications précédentes, **caractérisé en ce que** l'unité de commande (22) est prévue pour ouvrir la vanne d'arrêt (6) entre la coupure (t10) du chauffage (23) et un branchement (t12) consécutif du compresseur (2).

6. Appareil frigorifique selon l'une des revendications précédentes, **caractérisé en ce que** le compresseur (2) est configuré pour démarrer à une différence de pression qui se situe, après une phase d'arrêt du compresseur (2), qui n'enclenche pas le chauffage (23), entre une plage de haute pression (11) et une plage de basse pression (12) du cycle d'agent frigorigène (1).

7. Appareil frigorifique selon l'une des revendications précédentes, **caractérisé en ce que** l'évaporateur (8) est logé dans une chambre d'évaporation (18) séparée d'une chambre de stockage (17) de l'appareil frigorifique (13) et l'unité de commande (22) est prévue pour mettre en marche un ventilateur (21), lequel sert à faire circuler l'air entre la chambre de stockage (17) et la chambre d'évaporation (18) quand le compresseur (2) fonctionne la vanne d'arrêt (6) étant fermée.

8. Appareil frigorifique selon la revendication 7, **caractérisé en ce que** l'unité de commande (22) est prévue pour que le ventilateur (21) entre en service dans un laps de temps ([t8, t9]) entre la mise hors tension (t8) du compresseur (2) et la mise sous tension (t9) du chauffage (23).

9. Procédé de fonctionnement d'un appareil frigorifique, lequel comprend un cycle d'agent frigorigène (1) ayant un compresseur (2), un évaporateur (8) et une vanne d'arrêt (6) entre une sortie (3) du compresseur (2) et une entrée de l'évaporateur (8), comprenant les étapes suivantes :
- mise en service ([t7, t8]) du compresseur (2) la vanne d'arrêt (6) étant fermée :
- détection d'une température (TL) au moyen d'un détecteur de température (24) ;
- mise hors tension du compresseur (t8) en cas de dépassement négatif d'un premier seuil (T1) de la température (TL) détectée ; et ensuite
- chauffage ([t9, t10]) de l'évaporateur (8) pour dégivrer celui-ci, dans lequel la vanne d'arrêt (6) est fermée avant le dégivrage de l'évaporateur (8) quand un deuxième seuil (T2) de température est dépassé négativement, lequel est plus élevé que le premier seuil (T1).
